# EUROPEAN PATENT APPLICATION

(11) **EP 4 391 329 A1**
(43) Date of publication of application: **26.06.2024**
(21) Application number: 22216437.8
(22) Date of filing: 23.12.2022
(51) Int. Cl.: H02K 15/00, H02K 1/30

(54) **METHOD OF MECHANICALLY DISCONNECTING AN ELECTRICAL MACHINE FROM A ROTOR SHAFT**

(71) Applicant: GE Energy Power Conversion Technology Ltd, Rugby, Warwickshire CV21 1BD (GB)
(72) Inventor: COSTELLO, Glyn, RUGBY, CV21 1BD (GB); CLARKE, Andrew, RUGBY, CV21 1BD (GB); TETLOW, Luke, RUGBY, CV21 1BD (GB)
(74) Representative: Serjeants LLP

(57) **Abstract**

A method of mechanically disconnecting an electrical machine (1) from a rotor shaft (16) is described. The electrical machine (1) comprises a stator (4) and a rotor (2) that is mechanically connected to the rotor shaft (16) by one or more mechanical fixings (20). With the rotor shaft (16) stopped, either one or more supports are inserted into the air gap between the stator and the rotor or the stator is raised relative to the rotor so that the stator contacts the underside of the rotor. The rotor is therefore supported by the one or more supports or by the stator. The one or more mechanical fixings (20) are removed to mechanically disconnect the rotor (2) from the rotor shaft (16). The electrical machine is moved axially away from a part of the rotor shaft such as a shaft flange 18.

## Description

### Technical Field

The present invention relates to a method of mechanically disconnecting an electrical machine from a rotor shaft, particularly in the event of a fault such as a stator inter-turn fault (ITF) being detected.

The present invention also relates to a jacking apparatus for moving the electrical machine axially relative to the rotor shaft after the rotor of the electrical machine has been mechanically disconnected from the rotor shaft.

### Summary of the invention

The present invention provides a method of mechanically disconnecting an electrical machine from a rotor shaft in the event of a fault being detected, the electrical machine comprising:
a stator, and
a rotor that is mechanically connected to the rotor shaft by one or more mechanical fixings (e.g., screws or bolts),
the method comprising:
   with the rotor shaft stopped,
      (i) inserting one or more supports into the air gap between the stator and the rotor, and/or
      (ii) raising the stator relative to the rotor so that the stator contacts the underside of the rotor and the rotor is supported by the raised stator,
   removing the one or more mechanical fixings to mechanically disconnect the rotor from the rotor shaft, and
   moving the electrical machine (i.e., the stator and the supported rotor) axially relative to the rotor shaft. The electrical machine may be moved by a jacking apparatus, for example, so that the supported rotor is spaced apart from a part of the rotor shaft in the axial direction. The electrical machine may be moved axially away from a flange of the rotor shaft, for example.

The rotor may be supported by the one or more supports without also raising the stator, in which case the air gap will typically be substantially maintained around the whole circumference of the rotor. The rotor may also be supported by the raised stator with or without one or more supports being inserted into the remaining air gap between the stator and the rotor.

Once the rotor has been mechanically disconnected from the rotor shaft, the rotor shaft is free to rotate without also rotating the rotor.

The rotor and stator may have any suitable construction. The rotor may include a plurality of permanent magnets spaced circumferentially around the rotor. The permanent magnets may be positioned on the surface of the rotor, e.g., using magnet carrier assemblies that are fixed to the rotor surface or held in position using a sleeve or band. The permanent magnets may be embedded within the rotor. The interaction between the magnetic field generated by the permanent magnets and the stator will secure the rotor within the stator. If the rotor includes permanent magnets, i.e., if the electrical machine is a permanent magnet synchronous machine (PMSM), it is important to prevent any further rotation of the rotor in the event of a fault such as an inter-turn fault (ITF) being detected. Because the permanent magnets cannot be turned off, and will continue to generate a magnetic field, stopping the rotor is normally the only way to prevent fault current from continuing to be generated within the stator. But it may also be important that the rotor shaft is still allowed to rotate. The present method therefore provides an improved way of mechanically disconnecting the stopped rotor from the rotor shaft so that the latter may be allowed to rotate. The present method does not require the use of heavy and expensive tooling and may be carried out quickly.

A plurality of individual supports (or "packers") may be inserted into the air gap between the rotor and the stator. The supports are normally spaced circumferentially around the air gap. Each support may extend along substantially the whole axial length of the rotor and may be inserted into the air gap from one axial end of the electrical machine, or each support may extend only partly along the axial length of the rotor. In the latter case, a first plurality of supports may be inserted into the air gap from one axial end of the electrical machine and a second plurality of supports may be inserted into the air gap from the other axial end of the electrical machine, so that the rotor is supported at both axial ends.

Each support may be made of any suitable material and have any suitable construction.

If the stator is raised relative to the rotor, it is preferred that any axial movement of the stator is prevented while the stator is being raised. The stator may be raised by any suitable means that may be located underneath the stator, for example. The axial movement of the stator may be prevented by a jacking apparatus that limits the axial movement of the stator but permits vertical movement.

Prior to being removed, the one or more mechanical fixings may be received in aligned openings provided in a rotor flange and a shaft flange. The one or more mechanical fixings may be inserted and removed using any suitable tool, e.g., hydraulic or pneumatic torque equipment. The rotor is physically supported by the one or more supports or the raised stator so that it does not drop or move vertically after it is mechanically disconnected from the rotor shaft. The rotor may be directly mechanically connected to the rotor shaft or indirectly by means of an intermediate component.

If the fault is repaired or isolated, the rotor may be reconnected to the rotor shaft by moving the electrical machine axially relative to the rotor shaft in the opposite direction, e.g., so that the rotor flange is in contact with the shaft flange. One or more mechanical fixings may then be received in aligned openings provided in the rotor flange and the shaft flange to mechanically connect the rotor to the rotor shaft. The one or more supports are removed from the air gap and/or the stator is lowered relative to the rotor to fully restore the air gap. If the stator is lowered relative to the rotor, it is preferred that any axial movement of the stator is prevented while the stator is being lowered. The axial movement of the stator may be prevented by a jacking apparatus that limits the axial movement of the stator but permits vertical movement.

The electrical machine may be moved axially using a jacking apparatus. For example, the jacking apparatus may be used to move the electrical machine in a first axial direction so that the rotor is spaced apart from the part of the rotor shaft (e.g., where the rotor flange is spaced apart from the shaft flange). The jacking apparatus may also be used to move the electrical machine in a second axial direction, opposite to the first axial direction, when the rotor is to be mechanically reconnected to the rotor shaft (e.g., when the rotor flange is brought back into contact with the shaft flange so that they can be connected by the one or more mechanical fixings).

The electrical machine only needs to be moved a relatively short distance in the first axial direction so as to provide sufficient clearance between the rotor and the rotor shaft (e.g., between the rotor flange and the shaft flange). For example, the electrical machine might be moved about 100 mm.

The jacking apparatus may include at least one jacking screw at a first axial end of the electrical machine which may be used to move the electrical machine in the first axial direction when it is rotated in a first direction (e.g., a clockwise direction). The jacking apparatus may include at least one jacking screw at a second, opposite, axial end of the electrical machine which may be used to move the electrical machine in the second axial direction when it is rotated in a first direction (e.g., a clockwise direction).

The jacking apparatus may also be used to move the electrical machine in a lateral direction to permit sideways adjustment. In particular, the jacking apparatus may include at least one jacking screw at a first side of the electrical machine which may be used to move the electrical machine in a first lateral direction when it is rotated in a first direction (e.g., a clockwise direction) and at least one jacking screw at a second, opposite, side of the electrical machine which may be used to move the electrical machine in a second lateral direction, opposite to the first lateral direction, when it is rotated in a first direction (e.g., a clockwise direction).

When rotated in the first direction, a jacking screw may contact an outer frame or housing of the electrical machine which surrounds the stator and the rotor.

Rotating a jacking screw in a second, opposite, direction (e.g., an anti-clockwise direction) may retract the jacking screw away from the electrical machine, for example away from the outer frame or housing.

The jacking apparatus may be part of a mount for supporting the electrical machine. In one arrangement, a pair of mounts may be provided with a first mount being used to support a first side of the electrical machine and a second mount being used to support a second, opposite, side of the electrical machine - i.e., where the first and second mounts are spaced apart in the lateral direction. The first mount may include a first jacking apparatus with a jacking screw at each axial end of the electrical machine and a pair of jacking screws spaced apart in the axial direction for moving the electrical machine in the first lateral direction when rotated in a first direction (e.g., a clockwise direction). The second mount may include a second jacking apparatus with a jacking screw at each axial end of the electrical machine and a pair of jacking screws spaced apart in the axial direction for moving the electrical machine in the second lateral direction when rotated in a first direction (e.g., a clockwise direction).

It will be readily understood that other suitable jacking apparatus may be used. The jacking apparatus will be capable of moving the electrical machine axially and preferably laterally for sideways adjustment.

Further axial movement of the electrical machine may be prevented after it has been moved axially relative to the rotor shaft. In other words, after the electrical machine has been moved away from the part of rotor shaft, it may be temporarily fixed in the retracted position until the fault has been fixed or isolated and the rotor may be mechanically reconnected to the rotor shaft. The electrical machine may be fixed in the retracted position using one or more mechanical fixings (e.g., screws or bolts) with the rotor flange spaced apart from the shaft flange, for example. The one or more mechanical fixings may be removed to allow the electrical machine to be moved back to its original position so that the rotor may be mechanically reconnected to the rotor shaft.

The jacking apparatus may be configured to prevent further axial movement of the electrical machine when it is in the retracted position.

Before mechanically disconnecting the rotor from the rotor shaft it may be necessary to remove one or more shaft seals and/or one or more end covers of the electrical machine.

The present invention further provides an arrangement comprising:
a rotor shaft,
an electrical machine comprising a stator and a rotor mechanically connectable to the rotor shaft by one or more mechanical fixings, and
a jacking apparatus configured to move the electrical machine axially relative to the rotor shaft.

The rotor shaft, electrical machine and jacking apparatus may be substantially as described above.

### Drawings

Figure 1 is a schematic cross section view of an electrical machine before the rotor is mechanically disconnected from the rotor shaft;
Figure 2 is a schematic cross section view of the electrical machine of Figure 1 with supports inserted;
Figure 3 is a schematic end view of the electrical machine of Figure 2;
Figure 4 is a schematic cross section view of the electrical machine of Figure 2 with the mechanical fixings removed so that the rotor is mechanically disconnected from the rotor shaft;
Figure 5 is a schematic cross section of the electrical machine of Figure 4 with the stator and the supported rotor moved axially away from the shaft flange;
Figure 6 is a schematic cross section view of the electrical machine of Figure 1 with the rotor supported by the raised stator;
Figure 7 is a schematic cross section view of the electrical machine of Figure 6 with the mechanical fixings removed so that the rotor is mechanically disconnected from the rotor shaft;
Figure 8 is a schematic cross section of the electrical machine of Figure 7 with the stator and the supported rotor moved axially away from the shaft flange;
Figure 9 is a perspective view of a jacking system according to the present invention; and
Figure 10 is a detail view of the jacking system of Figure 9.

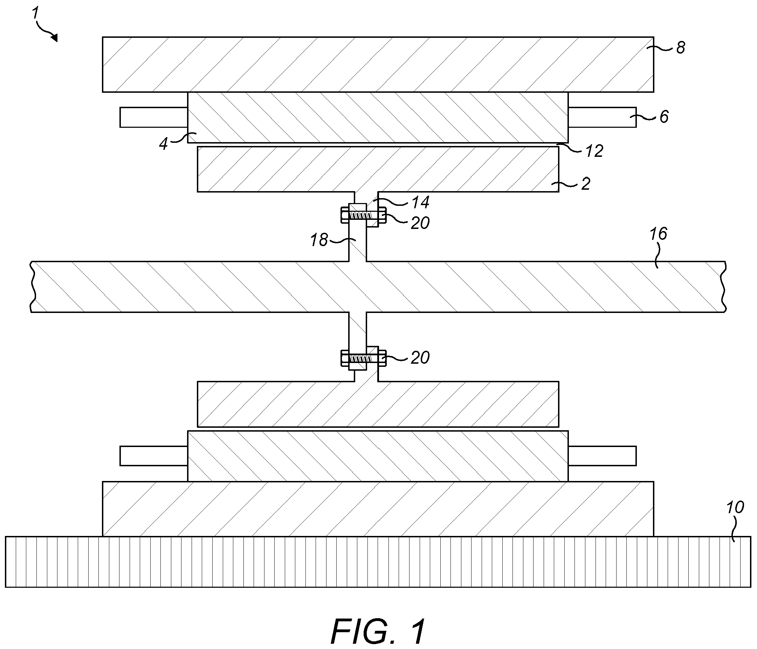

Referring to Figure 1, an electrical machine 1, e.g., a permanent magnet synchronous machine (PMSM), comprises a rotor 2, a stator 4 with a stator winding 6, and a stator frame 8. The stator frame 8 is mounted on a machine mount 10 and supports the stator 4.

The rotor 2 and the stator 4 are separated by an air gap 12.

The rotor 2 includes a rotor flange 14.

A rotor shaft 16 includes a shaft flange 18. The rotor flange 14 and the shaft flange 18 are mechanically connected by a plurality of circumferentially spaced mechanical fixings 20 (e.g., bolts). The mechanical fixings 20 are received in a plurality of circumferentially spaced aligned openings in the rotor flange 14 and the shaft flange 18. The mechanical fixings 20 may be installed and removed using any suitable tool, e.g., hydraulic or pneumatic torque equipment.

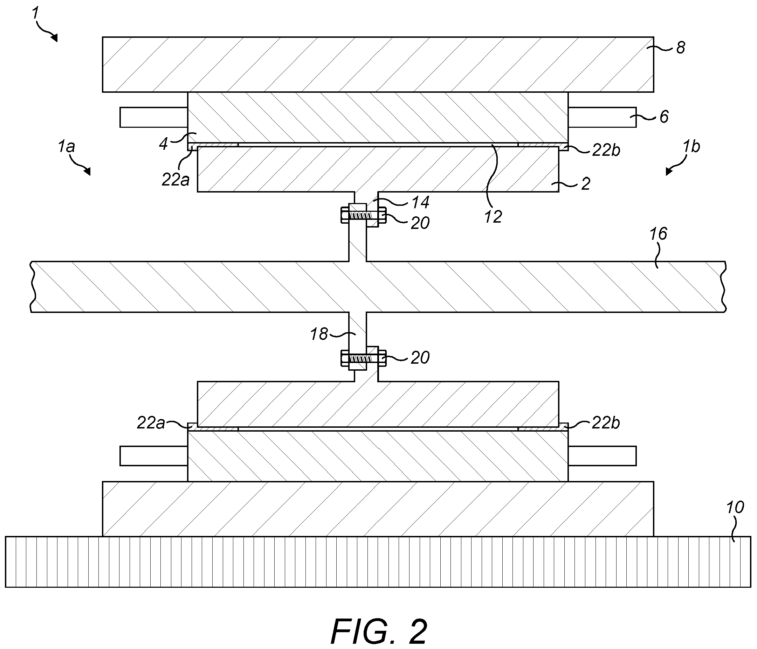

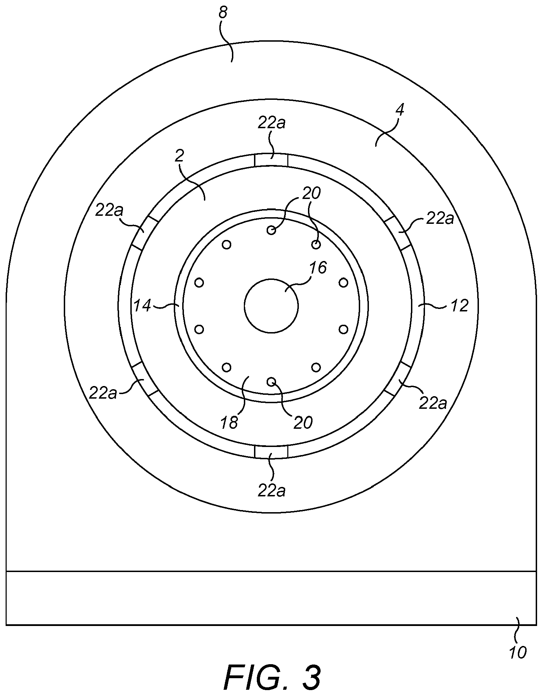

In the event of a fault being detected, the rotor 2 is to be mechanically disconnected from the rotor shaft 16 as quickly as possible. In a first method, with the rotor shaft 16 stopped, a first plurality of supports 22a (or "packers") are inserted into the air gap 12 from a first axial end 1a of the electrical machine 1 and a second plurality of supports 22b are inserted into the air gap from a second axial end 1b of the electrical machine (see Figure 2). The first and second plurality of supports 22a, 22b are circumferentially spaced around the air gap 12 (see Figure 3). The rotor 2 is therefore supported by the supports 22a, 22b at both axial ends with the air gap 12 substantially maintained.

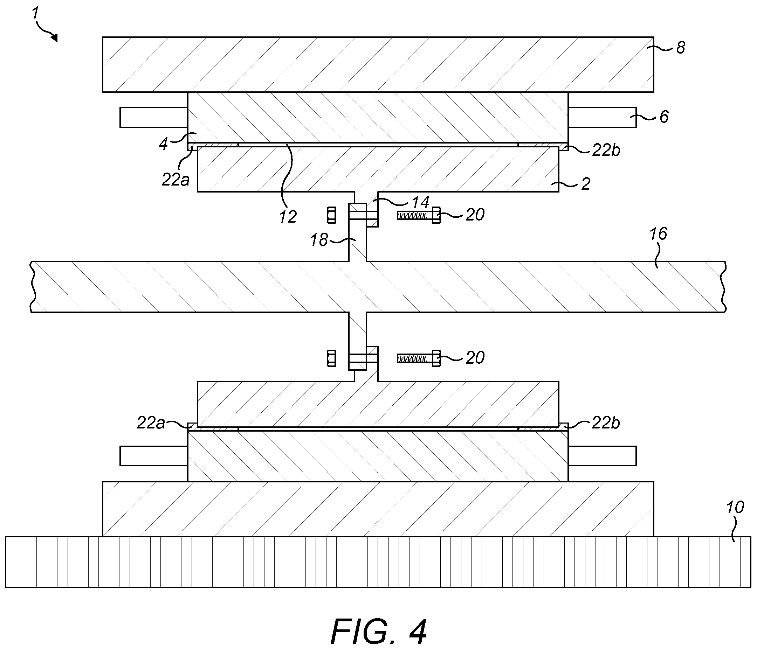

With the rotor 2 supported, the mechanical fixings 20 are removed (see Figure 4) so that the rotor 2 is mechanically disconnected from the rotor shaft 16. In particular, the rotor flange 14 is mechanically disconnected from the shaft flange 18.

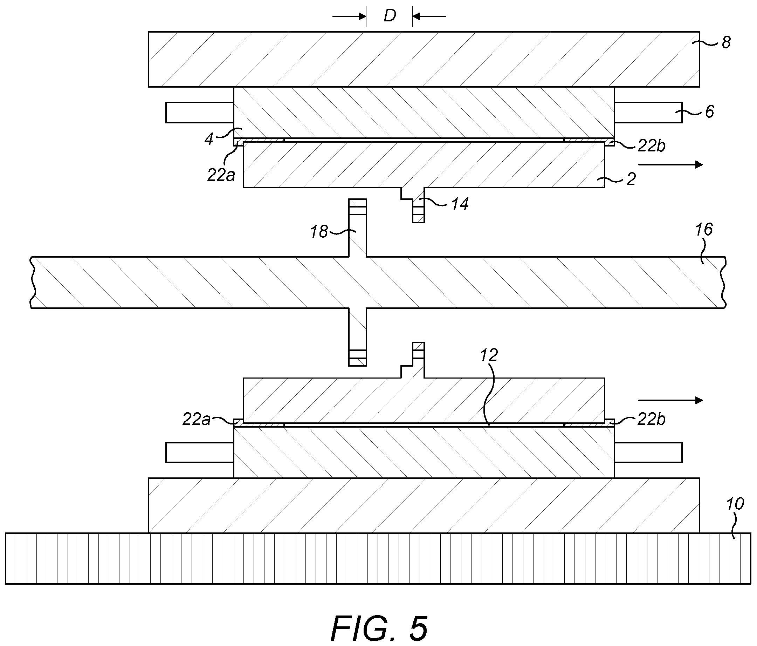

The electrical machine 1 (i.e., the supported rotor 2, stator 4, and the stator frame 8) is then moved axially away from the shaft flange 18. In Figure 5, the electrical machine 1 has been moved away from the shaft flange 18 by a distance D.

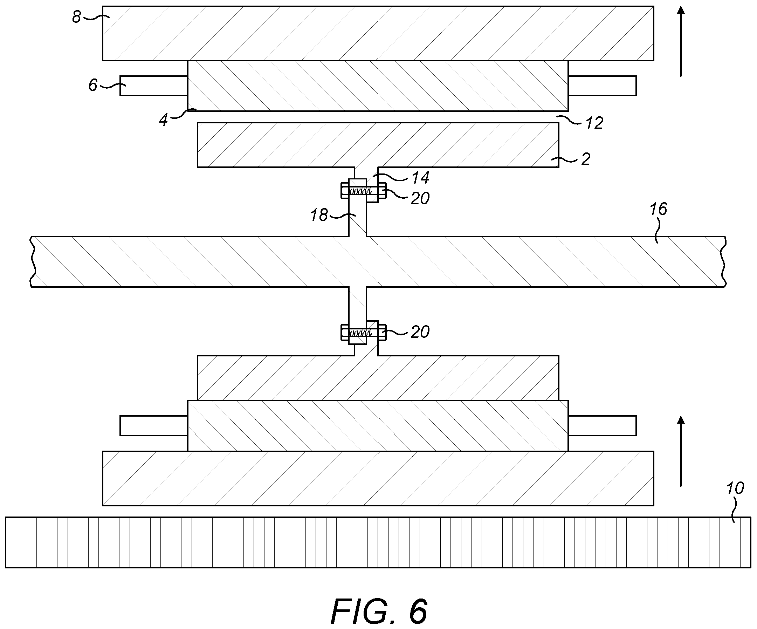

In a second method, with the rotor shaft 16 stopped, the stator 4 and stator frame 8 are raised relative to the rotor 2 until the stator contacts the underside of the rotor and the rotor is supported by the raised stator (see Figure 6). Axial movement of the stator 4 is preferably prevented while the stator is being raised. One or more supports may optionally be inserted into the remaining air gap 12 to provide additional support for the rotor.

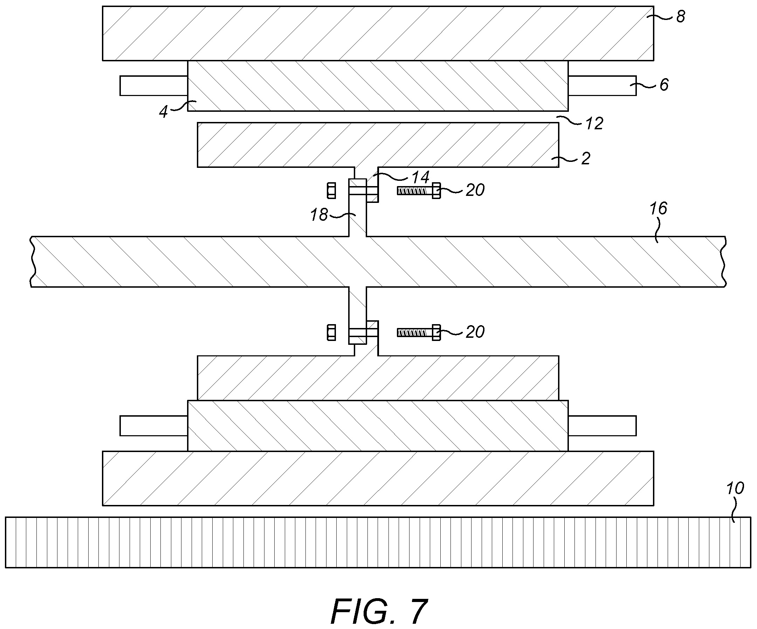

With the rotor 2 supported by the raised stator 4, the mechanical fixings 20 are removed (see Figure 7) so that the rotor is mechanically disconnected from the rotor shaft 16. In particular, the rotor flange 14 is mechanically disconnected from the shaft flange 18.

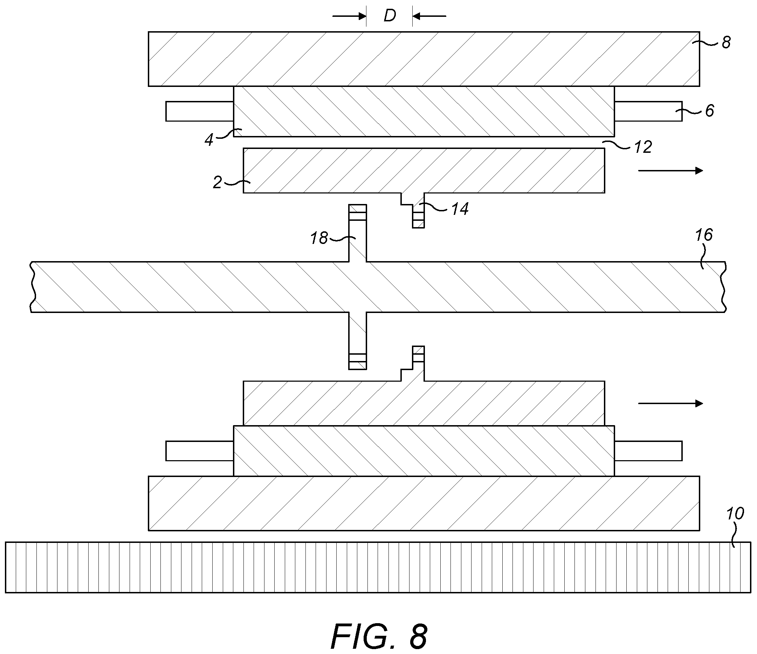

The electrical machine 1 (i.e., the supported rotor 2, stator 4, and the stator frame 8) is then moved axially away from the shaft flange 18. In Figure 8, the electrical machine has been moved away from the shaft flange 18 by a distance D.

Once the rotor flange 14 has been mechanically disconnected and spaced from the shaft flange 18, the rotor shaft 16 is free to rotate without also rotating the rotor 2. The electrical machine 1 only needs to be moved a relatively short distance so as to provide sufficient clearance between the rotor flange 14 and the shaft flange 18. For example, the distance D may be about 100 mm.

If the fault is repaired or isolated, the rotor 2 may be reconnected to the rotor shaft 14 by simply reversing the methods described above.

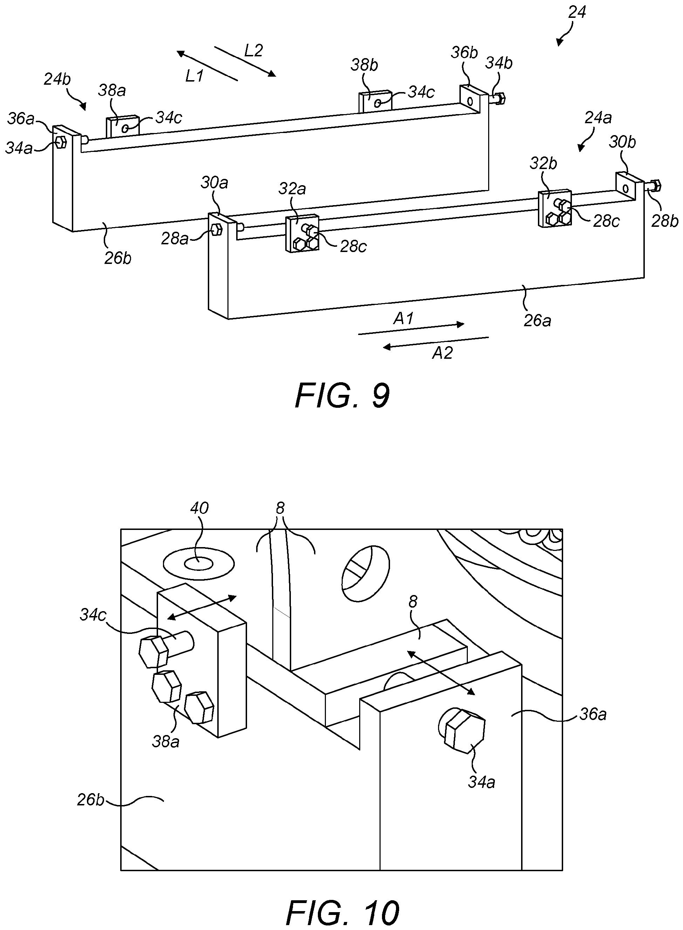

Figures 9 and 10 show an example of a jacking apparatus 24 that may be used to move the electrical machine 1. The jacking apparatus 24 is part of a mount for supporting the electrical machine 1. More particularly, a pair of mounts are provided with a first mount 26a being used to support a first side of the electrical machine 1 and a second mount 26b being used to support a second, opposite, side of the electrical machine - i.e., where the first and second mounts 27a, 26b are spaced apart in the lateral direction. The first mount 26a includes a first jacking apparatus 24a and the second mount 26b includes a second jacking apparatus 24b.

The first jacking apparatus 24a includes a first jacking screw 28a and a second jacking screw 28b. The first jacking screw 28a is received in a threaded opening in a first end bracket 30a at one axial end of the first mount 26a and the second jacking screw 28b is received in a threaded opening in a second end bracket 30b at the other axial end of the first mount 26a. The first and second end brackets 30a, 30b are spaced apart in the axial direction by a distance that is greater than the axial length of the stator frame 8 so that the stator frame can be moved axially relative to the first mount 26a by the first jacking apparatus 24a. Rotating the first jacking screw 28a in a first direction (e.g., a clockwise direction) will move the end of the first jacking screw towards the opposite axial end of the first mount 26a and into contact with an axial end of the stator frame 8 (see Figure 10). Rotating the second jacking screw 28b in a first direction (e.g., a clockwise direction) will move the end of the second jacking screw towards the opposite axial end of the first mount 26a and into contact with the other axial end the stator frame 8. By continuing to rotate the jacking screws in the first direction when they are in contact with the stator frame 8, the first jacking screw 28a can be used to move the electrical machine 1 in a first axial direction A1 and the second jacking screw 28b can be used to move the electrical machine in a second axial direction A2, opposite to the first axial direction. (To move the electrical machine in the first axial direction A1 it may first be necessary to rotate the second jacking screw 28b in a second direction (e.g., anti-clockwise) to move the end of the second jacking screw away from the stator frame 8. Similarly to move the electrical machine in the second axial direction A2 it may first be necessary to rotate the first jacking screw 28a in a second direction (e.g., anti-clockwise) to move the end of the first jacking screw away from the stator frame 8.)

The first jacking apparatus 24a also includes a pair of side brackets 32a, 32b that are fixed to the side of the first mount 26a and spaced apart in the axial direction. Each side bracket 32a, 32b includes a threaded opening for receiving a third jacking screw 28c. Rotating the third jacking screws 28c in a first direction (e.g., a clockwise direction) will move the ends of the third jacking screws towards and into contact with one side of the stator frame 8 (see Figure 10). The third jacking screws 28c of the first jacking apparatus 24a can therefore be used to move the electrical machine in a first lateral direction L1.

The second jacking apparatus 24b is the same as the first jacking apparatus 24a, except that the pair of side brackets 38a, 38b are fixed to the opposite side of the second mount 26b. The second jacking apparatus 24b includes a first jacking screw 34a and a second jacking screw 34b. The first jacking screw 34a is received in a threaded opening in a first end bracket 36a at one axial end of the second mount 26b and the second jacking screw 34b is received in a threaded opening in a second end bracket 36b at the other axial end of the second mount 26b. The first and second end brackets 36a, 36b are spaced apart in the axial direction by a distance that is greater than the axial length of the stator frame 8 so that the stator frame can be moved axially relative to the second mount 26b by the second jacking apparatus 24b as described above. Rotating the third jacking screws 34c of the second jacking apparatus 24b in a first direction (e.g., a clockwise direction) will move the ends of the third jacking screws towards and into contact with the other side of the stator frame 8. The third jacking screws 34c of the second jacking apparatus 24b can therefore be used to move the electrical machine 1 in a second lateral direction L2, opposite to the first lateral direction L1.

The end brackets 30a, 30b and 36a, 36b and the side brackets 32a, 32b and 38a, 38b of the first and second jacking apparatus 24a, 24b project above the planar top surface of the first and second mounts 26a, 26b and therefore limit the axial and lateral movement of the stator frame 8.

The electrical machine 1 may be moved in the first axial direction A1 by the first and second jacking apparatus 24a, 24b after the rotor flange 14 has been mechanically disconnected from the shaft flange 18. If the fault is fixed or isolated, the electrical machine 1 may be moved back in the second axial direction A2 by the first and second jacking apparatus 24a, 24b so that the rotor flange 14 can be mechanically reconnected to the shaft flange 18. Movement in the first and second lateral directions L1, L2 allows for additional sideways adjustment of the position of the electrical machine 1 relative to the rotor shaft 16.

Further axial movement of the electrical machine 1 may be prevented after the rotor flange 14 has been moved axially away from the shaft flange 18. In other words, the electrical machine 1 may be temporarily fixed in the retracted position until the fault has been fixed or isolated and the rotor may be mechanically reconnected to the rotor shaft. The electrical machine 1 may be fixed in the retracted position using one or more mechanical fixings (e.g., screws or bolts) with the rotor flange 14 spaced apart from the shaft flange 18. Figure 10 shows an opening 40 in the stator frame 8 which may be aligned with an opening (not shown) in the planar top surface of the first mount 26a when the electrical machine 1 is in the retracted position. The stator frame 8 may be fixed in the retracted position by inserting a mechanical fixing into the aligned openings. A plurality of openings in each side of the stator frame 8 may be aligned with corresponding openings in the first and second mounts 26a, 26b.

## Claims

1. A method of mechanically disconnecting an electrical machine (1) from a rotor shaft (16) in the event of a fault being detected, the electrical machine (1) comprising:
a stator (4), and
a rotor (2) that is mechanically connected to the rotor shaft (16) by one or more mechanical fixings (20),
the method comprising:
with the rotor shaft (16) stopped:
(i) inserting one or more supports (22a, 22b) into the air gap (12) between the stator (4) and the rotor (2), and/or
(ii) raising the stator (4) relative to the rotor (2) so that the stator (4) contacts the underside of the rotor (2) and the rotor (2) is supported by the raised stator (4),
removing the one or more mechanical fixings (20) to mechanically disconnect the rotor (2) from the rotor shaft (16), and
moving the electrical machine (1) axially relative to the rotor shaft (16).

2. A method according to claim 1, wherein the rotor (2) includes a plurality of permanent magnets spaced circumferentially around the rotor.

3. A method according to claim 1 or claim 2, wherein a plurality of supports (22a, 22b) are inserted into the air gap (12) between the rotor (2) and the stator (4).

4. A method according to claim 3, wherein the plurality of supports (22a, 22b) are spaced circumferentially around the air gap (12).

5. A method according to claim 1, wherein axial movement of the stator (4) is prevented while the stator (4) is being raised.

6. A method according to any preceding claim, wherein the electrical machine (1) is moved axially relative to the rotor shaft (16) using a jacking apparatus (24a, 24b).

7. A method according to claim 6, further comprising moving the electrical machine (1) laterally using the jacking apparatus (24a, 24b).

8. A method according to any preceding claim, further comprising preventing further axial movement of the electrical machine (1) after it has been moved axially relative to the rotor shaft (16).

9. A method according to any preceding claim, further comprising fixing the electrical machine (1) in position using one or more mechanical fixings after it has been moved axially relative to the rotor shaft (16).

10. A method according to any preceding claim, wherein the fault is an inter-turn fault in the stator winding (6) of the electrical machine (1).

11. An arrangement comprising:
a rotor shaft (16),
an electrical machine (1) comprising a stator (4) and a rotor (2) mechanically connectable to the rotor shaft (16) by one or more mechanical fixings (20), and
a jacking apparatus (24a, 24b) configured to move the electrical machine (1) axially relative to the rotor shaft (16).

12. An arrangement according to claim 11, wherein the jacking apparatus (24a, 24b) is further configured to move the electrical machine (1) in a first axial direction (A1) and a second axial direction (A2), opposite the first axial direction (A1).

13. An arrangement according to claim 11 or claim 12, wherein the jacking apparatus (24a, 24b) is further configured to move the electrical machine (1) in a first lateral direction (L1) and a second lateral direction (L2), opposite the first lateral direction (L1).

14. An arrangement according to any of claims 11 to 13, wherein the jacking apparatus (24a, 24b) is further configured to prevent further axial movement of the electrical machine (1) after it has been moved axially relative to the rotor shaft (16).

15. An arrangement according to any of claims 11 to 14, wherein the rotor (2) includes a rotor flange (14) and the rotor shaft (16) includes a shaft flange (18).
